# EUROPEAN PATENT APPLICATION

(11) **EP 4 811 251 A1**
(43) Date of publication of application: **23.09.2026**
(21) Application number: 25305402.7
(22) Date of filing: 21.03.2025
(51) Int. Cl.: G06Q 20/18, G06Q 20/20, G06Q 20/32, G06Q 20/34, G06Q 20/40, G07F 7/08

(54) **METHOD FOR PERFORMING A FINANCIAL TRANSACTION USING A DIGITAL BANK CARD**

(71) Applicant: THALES DIS FRANCE SAS, 92190 Meudon (FR)
(72) Inventor: LI, Junyu, Singapore 659445 (SG); BATARA, Akram, Singapore 648324 (SG); GU, Yajin, Singapore 128795 (SG); CHEUNG, Susido, Singapore 437373 (SG); SHEN, Mao Tian, Singapore 470114 (SG)
(74) Representative: Grevin, Emmanuel

(57) **Abstract**

The invention is a method for performing a financial transaction using a digital bank card (25) hosted in a communicating apparatus (20) assigned to a user (50), said communicating apparatus comprising a financial application (26). The method comprises the following steps:
- the financial application determines (S12) that an external factor authentication based on a hardware payment card (10) is required for the financial transaction; then
- a checking entity retrieves from the hardware payment card, a set (61) of one or more static banking parameters (14, 15, 16) specifically assigned to the hardware payment card; then
- the checking entity checks (S13, S18) that every banking parameter of the set is valid; then
- the financial application authorizes (S20) processing of the financial transaction using the digital bank card only if every banking parameter in the set has been deemed valid by the checking entity.

## Description

### (Field of the invention)

The present invention relates to methods for performing a financial transaction using a digital bank card. It relates particularly to methods for operating financial transactions based on a digital bank card which is hosted in communicating apparatus assigned to the user of digital bank card.

### (Background of the invention)

A digital bank card is a virtual version of a physical bank card. A digital bank card is typically stored on a smartphone or other digital device (like a digital watch) and can be used through a digital wallet for online transactions, mobile payments, or contactless purchases.

Contactless payments performed using digital bank card cards hosted in smartphones are convenient since they allow fast and easy payments. Currently with smart phone use, more and more payments are done through payment application with digital cards stored in digital wallet of smart phone through NFC (Near Field Communication) interface.

However, digital bank cards stored in smart phone could be used by a malicious person who found, or stole the smart phone, if this smartphone is unlocked or not protected by a secret code or a biometric pattern.

### (Summary of the Invention)

In the event that a smartphone hosting a digital bank card is stolen, a person who is not authorized to use the digital bank card may use it to perform a transaction without consent of the genuine user. Thus, there is a need to enhance security of use of digital bank cards.

The invention aims at solving the above-mentioned technical problem.

An object of the present invention is a computer-implemented method for performing a financial transaction using a digital bank card which is hosted in a communicating apparatus assigned to a user. The communicating apparatus comprises a financial application. The method comprises:
- determining, by the financial application, that an external factor authentication based on a hardware payment card assigned to said user is required for the financial transaction; then
- retrieving, by a checking entity, from the hardware payment card, a set of one or more static banking parameters specifically assigned to the hardware payment card; then
- checking, by the checking entity, that every banking parameter of the set is valid; then
- authorizing, by the financial application, processing of the financial transaction using the digital bank card only if every banking parameter in the set has been deemed valid by the checking entity.

Advantageously, the financial application may be the checking entity and the method may comprise the step of establishing, by the financial application, a wireless communication channel with said hardware payment card and getting directly from the hardware payment card the set by the financial application.

Advantageously, the checking entity may be a back-end server associated with an issuer of the hardware payment card and the method may comprise the steps of:
- establishing, by a bank terminal, a first communication channel between said back-end server and said hardware payment card and getting from the hardware payment card the set by the back-end server;
- generating, by the back-end server, a result data reflecting that every banking parameter in the set has been deemed valid; and
- establishing a second communication channel between said back-end server and said financial application, then sending the result data from the back-end server to the financial application.

Advantageously, the checking entity may be the financial application and the method may comprise the steps of:
- establishing, by a bank terminal, a first communication channel between said hardware payment card and a back-end server associated with an issuer of the hardware payment card and getting the set from the hardware payment card by the back-end server; and
- establishing a second communication channel between said back-end server and said financial application, then sending the set from the back-end server to the financial application.

Advantageously, the set may comprise at least one of the banking parameters: an expiry date of the hardware payment card, or an identifier of the hardware payment card.

Advantageously, the retrieving of the set by the financial application may be subject to an authentication of the user by the hardware payment card.

Advantageously, the authentication of the user may be performed by checking a secret code provided by the user or by checking a biometric data provided by the user.

Advantageously, the financial application may check that every banking parameter of the set is valid by verifying consistency and/or correctness of every banking parameter.

Advantageously, the financial application may determine that an external factor authentication is required by detecting that the financial transaction applies to an amount larger than a first threshold, the number of consecutive financial transactions performed without using the external factor authentication reaches a second threshold, a counter of financial transactions reaches a third threshold, or the location of the communicating apparatus does match a pre-authorized geographic area.

Advantageously, the communicating apparatus may be a phone or a connected watch.

Advantageously, the financial transaction may be a payment transaction, a cash withdrawal or a reading of a balance of a bank account.

Another object of the present invention is a system comprising a communicating apparatus assigned to a user. The communicating apparatus comprises a financial application and is able to perform a financial transaction using a digital bank card hosted in communicating apparatus. The financial application is configured to determine that an external factor authentication based on a hardware payment card which is assigned to the user is required for the financial transaction. The system comprises a checking entity configured to retrieve a set of one or more static banking parameters specifically assigned to the hardware payment card. The checking entity is configured to check that every banking parameter of the set is valid. The financial application is configured to authorize processing of the financial transaction using the digital bank card only if every banking parameter in the set has been deemed valid by the checking entity.

Advantageously, the financial application may be the checking entity and the financial application may be configured to establish a wireless communication channel with said hardware payment card and to get the set directly from the hardware payment card.

Advantageously, the checking entity may be a back-end server associated with an issuer of the hardware payment card. The system may comprise a bank terminal configured to establish a first communication channel between said back-end server and said hardware payment card. The back-end server may be configured to get the set from the hardware payment card, to generate result data reflecting that every banking parameter in the set has been deemed valid, to establish a second communication channel with the financial application, and to send the result data to the financial application.

Advantageously, the checking entity may be the financial application and the system may comprise a back-end server associated with an issuer of the hardware payment card. The system may comprise a bank terminal configured to establish a first communication channel between the hardware payment card and the back-end server. The back-end server may be configured to get the set from the hardware payment card through the first communication channel. The back-end server may be configured to establish a second communication channel with said financial application, then to send the set to the financial application through the second communication channel.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows an exemplary flow diagram for performing a financial transaction using a digital bank card according to a first example of the invention,
Fig. 2 shows an exemplary flow diagram for performing a financial transaction using a digital bank card according to a second example of the invention, Fig. 3 shows a diagram of architecture of a system comprising a communicating apparatus according to a first example of the invention, and
Fig. 4 shows a diagram of architecture of a system according to other examples of the invention.

### (Detailed description of the preferred embodiments)

The invention may apply to any type of digital bank card hosted in a communicating apparatus. The communicating apparatus may be a smartphone, a connected watch, a payment wristband, a personal digital assistant (PDA), or connected glasses for instance.

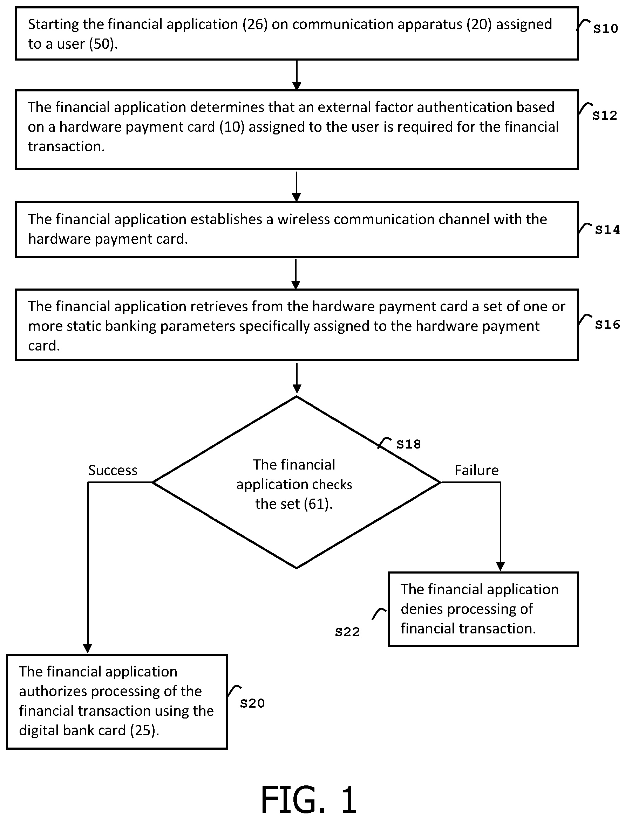

Figure 1 depicts a first exemplary flow diagram for performing a financial transaction using a digital bank card according to a first example of the invention.

In this example, the digital bank card is a digitalized credit card associated with a user (i.e. a bank customer) and can be used for payment transactions or cash withdrawals. The digital bank card has been installed in a communicating apparatus assigned to the user.

The communicating apparatus is a smartphone comprising a financial application which is configured to operate financial transactions using the digital bank card. The communicating apparatus is able to communicate with a point of sale (POS) terminal or an automated teller machine (ATM) through a contactless communication channel.

The financial transaction can be a payment transaction, a cash withdrawal, or the reading of a balance of a bank account for instance.

When a financial transaction is about to be made or has already started (step S10), the financial application determines (step S12) that an external factor authentication based on a hardware payment card assigned to the user is required for performing the financial transaction.

For example, the financial application may determine that an external factor authentication is required by detecting that the financial transaction applies to an amount larger than a first threshold. For instance, the first threshold can be set to 44 Singapore dollars so that the financial transaction requires the additional external factor authentication for payment transactions whose amount is higher than 44 Singapore dollars.

In some embodiments, the financial application may determine that an external factor authentication is required by detecting that the number of consecutive financial transactions performed without using the external factor authentication reaches a second threshold. In such cases, the financial application may rely on a transaction counter stored in the memory of the communicating device. The financial application may increment the transaction counter for each financial transaction performed without using the external factor authentication and reset the transaction counter when the external factor authentication is successful.

In some embodiments, the financial application may determine that an external factor authentication is required by detecting that a counter of financial transactions reaches a third threshold (i.e. regardless of whether an external authentication factor was used in previous transactions). In such cases, the financial application may rely on a global transaction counter stored in the memory of the communicating device. The financial application may increment the global transaction counter for each financial transaction performed and reset the global transaction counter when the global transaction counter reaches the third threshold.

In some embodiments, the financial application may determine that an external factor authentication is required by detecting that the location of the communicating apparatus does not match a pre-authorized geographic area. The financial application may rely on a global positioning system unit integrated in the communicating apparatus to get the current place of the communicating apparatus. For instance, the financial application may require an external factor authentication when the communicating apparatus is located outside a preset city, state, country, or continent.

In some embodiments, the financial application may determine that an external factor authentication is required by detecting that the current time is not withing a pre-established time range. The financial application may rely on an internal clock embedded in the communicating apparatus to get the current time. For instance, the financial application may require an external factor authentication when the current time is in the time range 10 p.m. - 7 a.m.

In some embodiments, the financial application may determine that an external factor authentication is required by detecting that the financial application is done for a specific type of service or goods.

In some embodiments, the financial application may determine that an external factor authentication is required depending on any combination of the contextual parameters mentioned above.

Once the financial application has determined that an external factor authentication is required for performing the financial transaction, the financial application establishes (step S14), a wireless communication channel with a hardware payment card then retrieves (step S16) from the hardware payment card a set of one or more static banking parameters that are specifically assigned to the hardware payment card.

Preferably, the hardware payment card is a conventional physical bank card that has been issued by a financial institution. Such a conventional physical bank card can be an autonomous payment instrument with which the cardholder of the conventional physical bank card can perform financial transactions. (i.e. without using the financial application embedded in the communicating apparatus.)

Preferably, the hardware payment card has been registered in the financial application (during a previous pairing phase) so that the financial application knows the identifier of the hardware payment card.

In some embodiments, the financial application and/or the hardware payment card may have stored secret keys (like symmetric keys or private & public keys belonging to a key pair) allowing them to secure the wireless communication channel.

For retrieving a set of one or more static banking parameters, the financial application may send one or more conventional read commands (as defined by well know protocols like EMV^{®} for instance) or one or more specifically designed read commands (i.e. having a proprietary format) through the wireless communication channel.

In some embodiments, every sent read command may target a specific field stored in the hardware payment card. Alternatively, the read command may contain the identifiers of the static banking parameters required by the financial application and the hardware payment card may be configured to return the proper data.

Every retrieved static banking parameter may be an expiry date of the hardware payment card, or an identifier of the hardware payment card for example. The static banking parameters may be any data that are specifically assigned to the hardware payment card and have a static value (i.e. a value which does not change over the financial transactions).

Once the financial application has retrieved the set of static banking parameter(s), it checks (step S18) that every static banking parameter of the set is valid. The financial application may check that every banking parameter of the set is valid by verifying the consistency and/or the correctness of all received banking parameters.

In some embodiments, the financial application may check that the retrieved expiration date is not reached or exceeded.

In some embodiments, the financial application may check that the identifier of the hardware payment card matches a reference identifier stored in the memory of the communicating apparatus during a previous pairing phase.

Only if the financial application finds every banking parameter of the set are valid, the financial application authorizes (step S20) processing of the financial transaction using the digital bank card.

If the financial application finds at least one banking parameter of the set is invalid, the financial application rejects (step S22) the processing of financial transaction.

In some embodiments, the retrieving of the set of static banking parameter(s) by the financial application can be subject to an authentication of the user by the hardware payment card. For example, the hardware payment card can authenticate the user by performing a check of a secret code (like a PIN code or a password) provided by the user (through a user interface of the communicating device for instance) or by checking a biometric data provided by the user. In particular, the hardware payment card may embed a fingerprint sensor and send the set to the financial application only after the cardholder presented valid biometrics.

If the financial application fails in retrieving the set of static banking parameter(s), the financial application rejects the financial transaction.

In the above-presented example, the financial application acts as a checking entity which controls the validity of the banking parameters in the set 61.

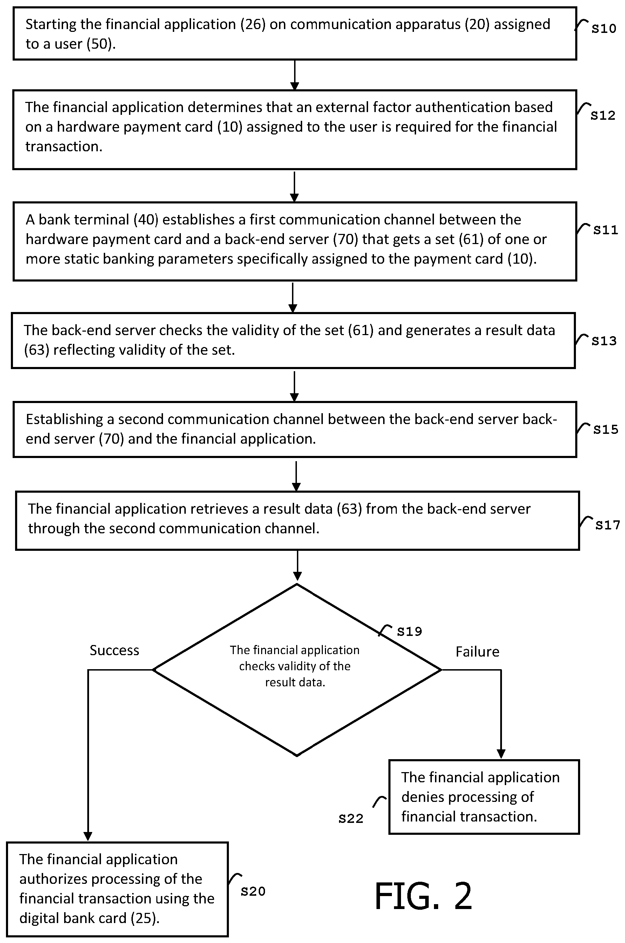

Figure 2 depicts a second exemplary flow diagram for performing a financial transaction using a digital bank card according to a second example of the invention.

In this example, the digital bank card and the communicating apparatus are similar to those of Fig. 1.

When a financial transaction is about to be made or has already started (step S10) between a bank terminal 40 and the financial transaction, the financial application determines that an external factor authentication is required (step S12). The financial application may determine the need of an external factor authentication in ways similar to those presented at Fig. 1.

The bank terminal 40 can be a POS terminal or an ATM for instance.

Then the bank terminal establishes (step S11) a first communication channel between a (remote) back-end server 70 and the hardware payment card 10. The back-end server is associated with the issuer of the hardware payment card 10.

The bank terminal may use data retrieve from the financial application or from the hardware payment card to identify the back-end server.

Then, the back-end server 70 gets the set 61 of static banking parameters from the hardware payment card through the first communication channel. It can be noted that the first communication channel passes through the bank terminal 40. For instance, the bank terminal may send one or more conventional read commands to the hardware payment card to retrieve the set 61.

Then, the back-end server 70 checks the validity of the banking parameters in the set 61 and generates (step S13) a result data 63 reflecting that every banking parameter in the set 61 has been deemed valid (or not).

Then, the back-end server establishes (step S15) a second communication channel between the back-end server and the financial application and sends (step S17) the result data 63 to the financial application through the second communication channel. The second communication channel can be established using any combination of private networks and/or conventional public networks like the Internet and telecom networks for instance.

Once the financial application has retrieved the result data 63, it checks (step S19) that every static banking parameter of the set is deemed valid.

Only if the financial application finds every banking parameter of the set 61 are valid, the financial application authorizes (step S20) processing of the financial transaction using the digital bank card.

If the financial application finds at least one banking parameter of the set 61 is invalid, the financial application rejects (step S22) the processing of financial transaction.

In the above-presented example, the back-end server 70 acts as a checking entity which controls the validity of the banking parameters in the set 61 and the financial application relies on the check performed by the back-end server.

In some embodiments, the set 61 of banking parameters may be conveyed from the digital bank card to the financial application through both the bank terminal and the back-end server, and the financial application may act as a checking entity which controls the validity of the banking parameters in the set 61 (similarly to what is described in Fig.1).

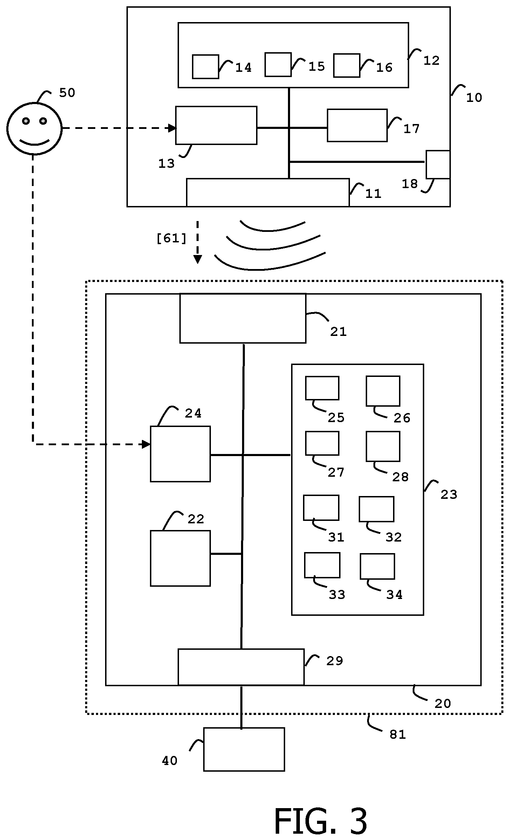

Figure 3 depicts a first diagram of architecture of a system 81 comprising a communicating apparatus according to an example of the invention.

In this example, the system 81 is operatively coupled with both a physical bank card 10 and a bank terminal 40. The physical bank card 10 is a payment smart card assigned to a user 50. The bank terminal 40 may be a POS terminal or an ATM for instance.

Smart cards are portable small devices comprising a memory, a microprocessor and an operating system for computing treatments. They may comprise services applications like Payment, Access control or Telecom applications. Such smart cards may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either in contact mode or contactless mode. Contact smart cards are designed to communicate according to at least one contact protocol like ISO/IEC7816 T=0 or T=1 communication protocols. Contactless smart cards are designed to communicate according to at least one contactless protocol like a protocol defined by ISO/IEC 14443 standard.

The physical bank card 10 comprises a secure chip 17 (also called secure element) and a communication interface 11 which is designed to exchange data with outside in wireless mode. Preferably, the communication interface 11 is an NFC interface. The communication interface 11 is usually linked to the secure element through a wired link.

In some embodiments, the communication interface 11 may be compliant with Bluetooth Low Energy^{©} (BLE).

The physical bank card 10 comprises a physical communication interface 18 able to communicate with a card reader integrated in a payment terminal or in an ATM using ISO/IEC 7816 standard or ISO/IEC 14443 standard.

In some embodiments, the communication interfaces 11 & 18 may be merged in a single interface.

The secure chip 17 comprises a hardware processor and a working memory which may be a RAM.

The physical bank card 10 comprises a non-volatile memory 12. The non-volatile memory stores an operating system that includes software instructions that are executed by the hardware processor to perform the features of the secure chip.

The physical bank card 10 may comprise a plurality of static banking parameters like an expiry date 14 of the hardware payment card, an identifier 15 of the hardware payment card, an identifier 16 of a bank account associated with the hardware payment card. These static banking parameters may be stored in the non-volatile memory 12. In some embodiments, the physical bank card 10 may comprise other static banking parameter like the name of the cardholder, a card verification code (known as cvv) or a card security code (known as csc) for instance.

As shown in Fig. 3, the physical bank card 10 may be communicably coupled to a communicating apparatus 20 assigned to the user 50. The communicating apparatus 20 may be a smartphone for instance.

The communicating apparatus 20 comprises a communication interface 21 which is designed to exchange data with the physical bank card 10 in wireless mode. Preferably, the communication interface 21 is compliant with ISO/IEC-14443 standard or Near Field Communications (NFC) specifications. Alternatively, the communication interface 21 may be a BLE interface compliant with Bluetooth Low Energy^{©} (BLE), a Wi-Fi interface or an Ultra-wideband (UWB) interface.

The communicating apparatus 20 comprises a physical communication interface 29 able to communicate with a card reader integrated in a payment terminal or in an ATM using ISO/IEC 7816 standard or ISO/IEC 14443 standard.

In some embodiments, the communication interfaces 21 & 29 may be merged in a single interface.

The communicating apparatus 20 comprises one or more hardware processors 22 and a non-volatile memory 23 storing an operating system that includes software instructions that are executed by the one or more hardware processors to perform the features of the communicating apparatus.

The communicating apparatus 20 comprises a financial application 26 and a digital bank card 25 stored in its non-volatile memory 23. The financial application 26 is designed to perform financial transactions using the digital bank card 25.

The financial application 26 is configured to determine that an external factor authentication based on the hardware payment card 10 is required for a financial transaction. The financial application 26 may use parameters intrinsic to the pending financial transaction and/or parameters which are specific to the communicating apparatus 20 to determine if an external factor authentication is required.

If an external factor authentication is required, the financial application is configured to establish a wireless communication channel with the hardware payment card 10 and to retrieve from the hardware payment card (through the wireless communication channel) a set 61 of one or more static banking parameters specifically assigned to the hardware payment card.

Every retrieved static banking parameter is supposed to reflect a value specifically allocated to the hardware payment card.

The financial application is configured to check the validity of every banking parameter of the set and to authorize processing of the financial transaction using the digital bank card only if every banking parameter of the set is valid.

The set 61 retrieved by the financial application may comprise any combination of the banking parameters stored in the hardware payment card 10.

In some embodiments, the financial application is configured to check that every banking parameter of the set 61 is valid by using a pre-stored group 27 of reference elements stored in the non-volatile memory of the communicating apparatus and/or the current date provided by a clock (not shown in Fig. 2) embedded in the communicating apparatus. For instance, the pre-stored group 27 may comprise a reference expiry date of the hardware payment card, a reference identifier of a bank account associated with the hardware payment card, a reference name of the cardholder of the hardware payment card, and/or a reference card verification code (i.e. cvv) of the hardware payment card.

The financial application may be configured to check the validity of all banking parameters of the set 61 by comparing every received banking parameter with the proper reference element.

In some embodiments, every banking parameter can be a hash (generated by the hardware payment card) of a value of field (or register or container) stored in the non-volatile memory of the hardware payment card.

In some embodiments, the financial application is configured to determine that an external factor authentication is required by detecting that the financial transaction applies to an amount which is larger than a preset threshold 31 stored in the communicating apparatus 20.

In some embodiments, the financial application is configured to determine that an external factor authentication is required by detecting that the number of consecutive financial transactions performed without using the external factor authentication reaches a predefined threshold 32 stored in the communicating apparatus 20.

In some embodiments, the financial application is configured to determine that an external factor authentication is required by detecting that a counter 28 of financial transactions reaches a specific threshold 33 stored in the communicating apparatus 20.

In some embodiments, the financial application is configured to determine that an external factor authentication is required by detecting that the location of the communicating apparatus does not belong to a pre-authorized geographic area 34 stored in the communicating apparatus 20. The financial application may get the place of the communicating apparatus by retrieving a location data from a global positioning unit embedded in the communicating apparatus or from the coupled terminal 40 (POS/ATM) for instance.

In some embodiments, the financial application is configured to determine that an external factor authentication is required by detecting that the merchant, service or product to which the financial transaction relates is of a certain type or category.

In some embodiments, the financial application may be configured to use any combination of the above-listed parameters to determine that an external factor authentication is required in order to continue the current financial transaction.

In some embodiments the financial application 26 may be a digital wallet like Apple Pay^{®}, Google Pay^{®} or Samsung Pay^{®} for instance.

In some embodiments the hardware payment card can be configured to condition the sending of the set 61 (to the financial application) on the authentication of the user 50 by the hardware payment card. In some examples, the authentication of the user may be performed by checking a secret code (like a PIN code or a password) provided by the user to the user interface 24 of the communicating apparatus and sent to the hardware payment card via the wireless communication channel.

In some examples, the hardware payment card 10 may embed a biometric sensor 13 and the user may provide a proper biometric data directly to the biometric sensor. Thus, the hardware payment card 10 may check the user is the genuine cardholder before sending the set 61 of banking parameters to the financial application 26.

When an external factor authentication is required, the financial application is configured to reject the financial transaction if at least one banking parameter of the received set is found to be invalid, if the needed set is not received from the hardware bank card, or if the wireless communication channel cannot be established with the hardware bank card.

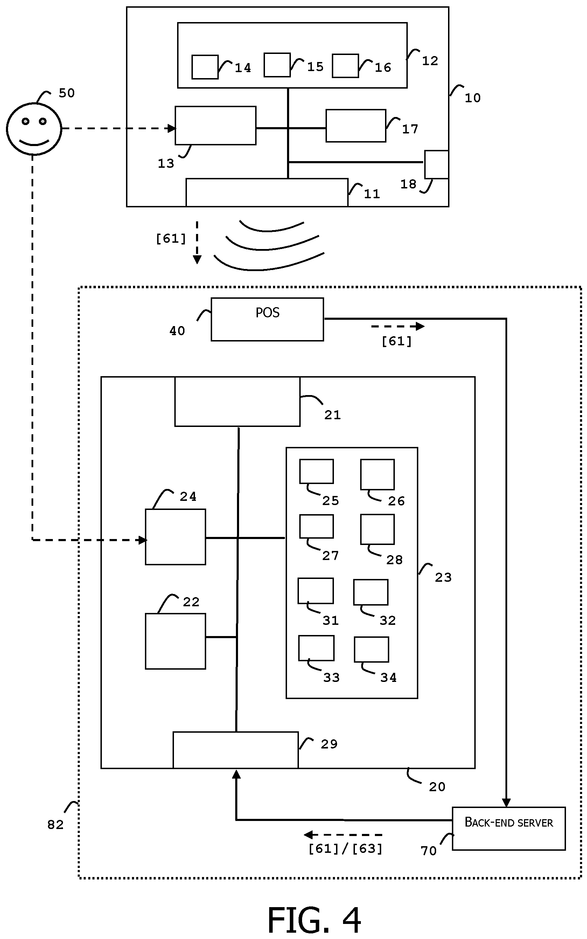

Figure 4 depicts a second diagram of architecture of a system 82 according to an example of the invention.

The system 82 comprises the communicating apparatus 20, a bank terminal 40 and a back-end server 70 associated with the issuer of the hardware payment card 10.

The communicating apparatus 20 comprises a physical communication interface 29 able to communicate with the back-end server 70 using any combination of known communication protocols, like Telecom network protocols and the Internet for instance.

The bank terminal 40 (like a POS terminal) is configured to retrieve the set of static banking parameters by using a communication interface able to communicate with the communication interface 11 of the hardware card 10. The communication channel between the bank terminal 40 and the card 10 can be established in contact or contactless mode.

The bank terminal 40 is configured to establish a first communication channel between the back-end server 70 and the hardware payment card 10.

The back-end server 70 may be a remote hardware server comprising one or more hardware processors and software instructions which, when executed by the one or more hardware processors, provides the functions of the back-end server.

The back-end server 70 is configured to get the set 61 of static banking parameters from the hardware payment card, to check the validity of these retrieved banking parameters and to generate a result data 63 which reflects that every banking parameter in the set 61 has been deemed valid (or not).

The back-end server 70 is configured to establish a second communication channel with the financial application, and to send the result data 63 to the financial application.

The financial application is configured to determine that every static banking parameter of the set is deemed valid by checking the received result data 63.

In some embodiments of the system 82, the back-end server 70 may be configured to get the set 61 from the hardware payment card through the first communication channel, to establish a second communication channel with the financial application, and to forward the set 61 to the financial application through the second communication channel. The financial application may be configured to check the validity of the banking parameters in the retrieved set 61. In such embodiments, the financial application gets the set 61 via the combination of the bank terminal and the back-end server.

Thanks to some embodiments of the invention, it is possible to defeat attempts to perform a financial transaction on a stolen communicating apparatus.

It is to be noted that even if data of the physical bank card is used to enhance the security a financial transaction, the data of the physical bank card are not revealed to the terminal (POS/ATM) coupled to the communicating apparatus.

It is to be noted that banking parameters retrieved (from the physical bank card) by the financial application have a static value. As a result, the physical bank card can send the set of requested banking parameters very quickly without wasting time in dynamically generating the values of the banking parameters.

For convenience and to ensure a good user experience, additional external factor authentication is not systematically requested. The financial application is able to automatically adapt security measures to the particular context of the financial transaction to be performed.

The invention is not limited to the described embodiments or examples. In particular, the described features of the presented embodiments may be combined as can be understood by those skilled in the art.

The communicating apparatus may comprise two or more digital bank cards and the financial application may be configured to perform a financial transaction using the digital bank card selected by the user.

## Claims

1. A computer-implemented method for performing a financial transaction using a digital bank card (25) hosted in a communicating apparatus (20) assigned to a user (50), said communicating apparatus comprising a financial application (26),
wherein said method comprises:
- determining (S12), by the financial application, that an external factor authentication based on a hardware payment card (10) assigned to said user is required for the financial transaction; then
- retrieving, by a checking entity, from the hardware payment card, a set (61) of one or more static banking parameters (14, 15, 16) specifically assigned to the hardware payment card; then
- checking (S13, S18), by the checking entity, that every banking parameter of the set is valid; then
- authorizing (S20), by the financial application, processing of the financial transaction using the digital bank card only if every banking parameter in the set has been deemed valid by the checking entity.

2. The method according to claim 1, wherein the financial application is the checking entity and wherein said method comprises:
- establishing (S14), by the financial application, a wireless communication channel with said hardware payment card (10) and getting (S16) directly from the hardware payment card the set (61) by the financial application.

3. The method according to claim 1, wherein the checking entity is a back-end server (70) associated with an issuer of the hardware payment card and wherein said method comprises:
- establishing (S11), by a bank terminal (40), a first communication channel between said back-end server and said hardware payment card (10) and getting from the hardware payment card the set (61) by the back-end server;
- generating (S13), by the back-end server, a result data (63) reflecting that every banking parameter in the set has been deemed valid; and
- establishing (S15) a second communication channel between said back-end server and said financial application, then sending (S17) the result data (63) from the back-end server to the financial application.

4. The method according to claim 1, wherein the checking entity is the financial application and wherein said method comprises:
- establishing (S11), by a bank terminal (40), a first communication channel between said hardware payment card (10) and a back-end server (70) associated with an issuer of the hardware payment card and getting the set (61) from the hardware payment card by the back-end server; and
- establishing (S15) a second communication channel between said back-end server and said financial application, then sending the set (61) from the back-end server to the financial application.

5. The method according to any of the preceding claims, wherein the set comprises at least one of the banking parameters: an expiry date of the hardware payment card, or an identifier of the hardware payment card.

6. The method according to any of the preceding claims, wherein the retrieving of the set by the financial application is subject to an authentication of the user (50) by the hardware payment card.

7. The method according to claim 6, wherein the authentication of the user is performed by checking a secret code provided by the user or by checking a biometric data provided by the user.

8. The method according to any of the preceding claims, wherein the financial application checks that every banking parameter of the set is valid by verifying consistency and/or correctness of every banking parameter.

9. The method according to any of the preceding claims, wherein the financial application determines that an external factor authentication is required by detecting that the financial transaction applies to an amount larger than a first threshold (31), the number of consecutive financial transactions performed without using the external factor authentication reaches a second threshold (32), a counter of financial transactions reaches a third threshold (33) or the location of the communicating apparatus does match a pre-authorized geographic area (34).

10. The method according to any of the preceding claims, wherein the communicating apparatus is a phone or a connected watch.

11. The method according to any of the preceding claims, wherein the financial transaction is payment transaction, a cash withdrawal or a reading of a balance of a bank account.

12. A system (81,82) comprising a communicating apparatus (20) assigned to a user (50), said communicating apparatus comprising a financial application (26) and being able to perform a financial transaction using a digital bank card (25) hosted in communicating apparatus,
wherein the financial application is configured to determine that an external factor authentication based on a hardware payment card (10) assigned to said user is required for the financial transaction;
wherein the system comprises a checking entity (20,70) configured to retrieve a set (61) of one or more static banking parameters (14, 15, 16) specifically assigned to the hardware payment card;
wherein the checking entity is configured to check that every banking parameter of the set is valid; and
- the financial application is configured to authorize processing of the financial transaction using the digital bank card only if every banking parameter in the set has been deemed valid by the checking entity.

13. The system (81) according to claim 12, wherein the financial application is the checking entity and wherein the financial application is configured to establish a wireless communication channel with said hardware payment card (10) and to get the set (61) directly from the hardware payment card.

14. The system (82) according to claim 12, wherein the checking entity is a back-end server (70) associated with an issuer of the hardware payment card,
wherein the system comprises a bank terminal (40) configured to establish a first communication channel between said back-end server and said hardware payment card (10);
wherein the back-end server is configured to get the set (61) from the hardware payment card, to generate result data (63) reflecting that every banking parameter in the set has been deemed valid, to establish a second communication channel with the financial application, and to send the result data (63) to the financial application.

15. The system (82) according to claim 12, wherein the checking entity is the financial application,
wherein the system comprises a back-end server (70) associated with an issuer of the hardware payment card;
wherein the system comprises a bank terminal (40) configured to establish a first communication channel between said hardware payment card (10) and said back-end server (70);
wherein the back-end server is configured to get the set (61) from the hardware payment card through the first communication channel; and
wherein the back-end server is configured to establish a second communication channel with said financial application, then to send the set (61) to the financial application through the second communication channel.
